(19) **Europäisches Patentamt**
**European Patent Office**
**Office européen des brevets**

(11) **EP 1 786 187 B1**

(12) **EUROPEAN PATENT SPECIFICATION**

(45) Date of publication and mention
of the grant of the patent:
**08.10.2008 Bulletin 2008/41**

(51) Int Cl.:
***H04M 3/22*** *(2006.01)*

(21) Application number: **06753102.0**

(86) International application number:
**PCT/CN2006/001568**

(22) Date of filing: **05.07.2006**

(87) International publication number:
**WO 2007/028303 (15.03.2007 Gazette 2007/11)**

(54) **A METHOD FOR CALCULATING THE ATTANUATION OF THE EXTERIOR DIGITAL SUBSCRIBER LINE**

VERFAHREN ZUR BERECHNUNG DER DÄMPFUNG DER AUSSENSEITIGEN DIGITALEN TEILNEHMERLEITUNG

PROCEDE DE CALCUL DE L'ATTENUATION DE LA LIGNE D'ABONNE NUMERIQUE EXTERIEURE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.09.2005 CN 200510098378**

(43) Date of publication of application:
**16.05.2007 Bulletin 2007/20**

(73) Proprietor: **Huawei Technologies Co., Ltd.**
**Longgang District**
**Shenzhen 518129 (CN)**

(72) Inventors:
• **LI, Sheng**
**Guangdong 518129 (CN)**

• **REN, Xiongwei**
**Guangdong 518129 (CN)**

(74) Representative: **Thun, Clemens et al**
**Mitscherlich & Partner**
**Sonnenstrasse 33**
**80331 München (DE)**

(56) References cited:
**WO-A-01/01597**          **WO-A-01/24492**
**US-A- 5 128 619**          **US-A- 5 465 287**
**US-A- 5 548 222**          **US-A1- 2003 173 399**
**US-B1- 6 687 289**

**Description**

Field of the Invention

The present invention relates to broadband measurement technology, and particularly, to a method for calculating attenuation of Digital Subscriber Line (DSL).

Background of the invention

Along with the development of communication technologies, the transmission rate of the backbone network has been increasing greatly. In contrast, the transmission rate of the access network becomes a bottleneck. The DSL technology is one of the major solutions dealing with the bottleneck. The DSL includes various types, such as High-bit-rate Digital Subscriber Line (HDSL), Asymmetric Digital Subscriber Line (ADSL) and Very-high-speed Digital Subscriber Line (VDSL); all of the types are called by a uniform name X Digital Subscriber Line (XDSL).

The number of subscribers of the XDSL has been growing rapidly and maintenance workload of the XDSL for telecommunication operators becomes heavier and heavier, accordingly the demand for broadband test systems has also been growing. The broadband test system may quickly obtain information, such as the quality and the highest transmission rate of an XDSL, and may locate anomalies. The current mainstream broadband test systems may be divided into two categories: one is represented by Time Domain Retlect (TDR) and the other is represented by a method of first parameter measurement. The TDR may be simply explained as sending a test signal into the line and testing the reflected back signal. The attenuation of the line is then calculated out based on features of the signal sent and the reflected back signal, and the maximum rate that the line may afford is further calculated out by combining the attenuation feature of the line and noise on the line. In the first parameter measurement scheme, the first parameters of the line are measured first, i.e., the total resistance $R$ of the two wires of a twisted pair, the total inductance L of the two wires of the twisted pair, the wire-to-wire conductance $G$ of the twisted pair and the wire-to-wire capacitance $C$ of the twisted pair. With these first parameters, the attenuation feature of the line may be calculated out, and the maximum rate of the line may further be calculated out based on the attenuation feature and the noise of the line. Although the principles of the two schemes are different, both of the two schemes need to obtain the attenuation feature of the line first. Thus, the measurement of the attenuation feature of the line is very important.

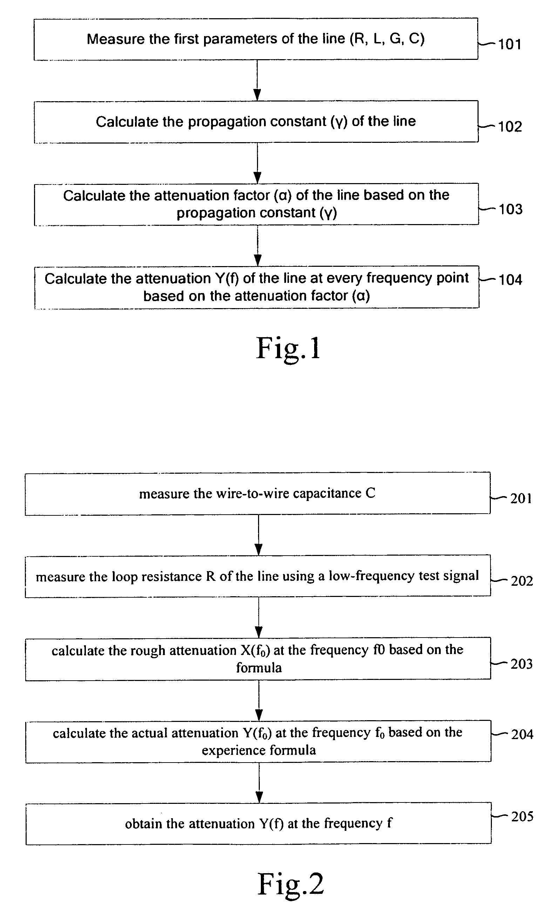

Supposing that the length of the twisted pair to be tested is $l$ meters, and the diameter of the twisted pair is $d$ meters. Fig. 1 shows a process of obtaining the attenuation feature of the line using the first parameter measurement method. As shown in Fig. 1, the process includes:

Step 101: measure the first parameters of the line, including $R(f)$, $L(f)$, $G$ and $C$, at a high frequency $f$.

Where $R(f)$ is the total resistance of the two wires of the twisted pair at the frequency $f$, i.e., the loop resistance. When the frequency $f$ varies, $R(f)$ varies in a large scope with the variation of the frequency $f$. $L(f)$ is the total inductance of the two wires of the twisted pair at the frequency $f$; when the frequency $f$ varies, $L(f)$ is also varies in a large scope with the variation of the frequency $f$. $G$ is the wire-to-wire conductance of the twisted pair; $G$ does not vary with the variation of the frequency $f$ and the variation is usually ignored in the calculation. $C$ is the wire-to-wire capacitance of the twisted pair; $C$ does not vary with the variation of the frequency $f$.

Step 102: Calculate the propagation constant $\gamma$ of the line based on the first parameters obtained.

According to the transmission line theory, the propagation constant $\gamma$ of the line may be obtained through formula 1:

$$\gamma(f) = \sqrt{(R(f) + j\varpi L(f))(G + j\varpi C)}\Big/l \qquad (1)$$

where $\overline{\omega} = 2\pi\, f$, $\pi$ denotes pi.

The propagation constant $\gamma$ determines the energy attenuation and transmission delay of a signal transmitted along the twisted pair. According to the skin effect, the result of the formula 1 is a function of complex variable, and the $\gamma$ may be divided into a real part and an imaginary part:

$$\gamma = \alpha/l + j\beta/l \qquad (2)$$

Where $\alpha/l$ is the real part of $\gamma$, which determines the energy attenuation of the signal, so $\alpha$ is also called an

attenuation factor. And $j\beta/l$ is the imaginary part of $\gamma$, which determines the transmission phase delay of the signal.

Step 103: calculate the attenuation factor $\alpha$ based on the propagation constant $\gamma$. It can be seen from the formula 2 that $\alpha$ equals to a result of the real part of $\gamma$ multiplying the length $l$ of the twisted pair; and it may be concluded from the formulas 1 and 2 that $\alpha$ equals to the real part of $\sqrt{(R(f) + j\varpi L(f))(G + j\varpi C)}$, therefore the attenuation factor $\alpha$ may be obtained through calculating the real part of the formula 1 or that of $\sqrt{(R(f) + j\varpi L(f))(G + j\varpi C)}$.

It should be noted that $\sqrt{(R(f) + j\varpi L(f))(G + j\varpi C)}$ in the formula 1 is a function of the frequency $f$, consequently $\alpha$ is also a function of the frequency $f$ and may also be expressed as $\alpha(f)$.

Step 104: calculate the attenuation $Y(f)$ at each frequency based on the attenuation factor $\alpha(f)$.

The attenuation $Y(f)$ is calculated following formula 3:

$$Y(f) = 20\log_{10} e^{\alpha(f)} = 20\log_{10} e \times \alpha(f) \qquad (3)$$

Where e is the base of the natural logarithm, $\log 10 e^{\alpha(f)}$ denotes the logarithm of $e^{\alpha(f)}$ with base 10, and $\log 10 e$ denotes the logarithm of e with base 10.

It may be concluded from the fore-going technical scheme that the four first parameters $R(f)$, $L(f)$, $G$ and $C$ should be obtained before the calculation of the attenuation $Y(f)$ at the frequency $f$, and the it should be the frequency $f$ at which $R(f)$ and $L(f)$ in the formula 1 are obtained. However, the frequency $f$ is usually high in practical applications and it is hard to measure $R(f)$ and $L(f)$ at the high frequency, and there may be a considerable error between the calculated attenuation and the actual attenuation.

Furthermore, many subscriber lines are mixed-diameter lines combining lines of diameter 0.4mm and lines of diameter 0.5mm. To calculate the attenuation of the mixed-diameter line through the above technical scheme, the $R(f)$, $L(f)$, $G$ and $C$ of each segment of the mixed-diameter line has to be measured separately and the attenuation of each segment is also to be calculated separately before summing up the attenuations of all the segments to obtain the attenuation of the whole line. The measurement and the calculation are very complicated. Moreover, it is difficult to measure the first parameters of the segments and considerable errors are easy to occur. As a result, the total attenuation obtained is inaccurate.

International patent application WO 01/01597 provides a method of assessing the suitability of customer telephone lines for data transmission. The method includes selecting a telephone line having tip and ring wires by means of a computer and switch, and electrically connecting the tip and ring wires together at a test access adjacent one end of the selected line to produce a common mode configuration. Single-ended electrical measurements are performed on the wires in the common mode configuration by a measurement unit connected to the test access to determine an electrical property of the wires from the measurements.

Summary of the invention

Some embodiments of the present invention provide a method for calculating attenuation of a Digital Subscriber Line (DSL), so as to make it needless to calculate the attenuation based on four first parameters $R(f)$, $L(f)$, $G$, $C$ at a given frequency $f$.

According to some embodiments of the present invention, the method for calculating attenuation of a DSL comprises:

sending a low-frequency test signal into the line;

measuring a wire-to-wire capacitance and a loop resistance of the line according to the low-frequency signal,

calculating an actual attenuation of the line based on the wire-to-wire capacitance, the loop resistance, a first frequency, a first constant and a second constant ;

calculating an attenuation of the line at a test frequency based on the actual attenuation of the line at the first frequency, the first frequency and the test frequency.

Preferably, the process of calculating an actual attenuation of the line at a first frequency based on the wire-to-wire capacitance, the loop resistance, the first frequency, the first constant and the second constant includes:

calculating a rough attenuation of the line based on the wire-to-wire capacitance, the loop resistance and the first frequency; and

multiplying the rough attenuation of the line at the first frequency by the first constant and adding the second constant to the result to obtain the actual attenuation of the line at the first frequency.

Before the process of multiplying the rough attenuation of the line at the first frequency by the first constant and the adding the second constant to the result to obtain the actual attenuation of the line at the first frequency, the method further includes:

measuring the loop resistance, the wire-to-wire capacitance and calculating the actual attenuation of a first line at the first frequency; measuring the loop resistance, the wire-to-wire capacitance and calculating the actual attenuation of a second line at the first frequency;

calculating the rough attenuation of the first line at the first frequency based on the wire-to-wire capacitance and loop resistance of the first line; calculating the rough attenuation of the second line at the first frequency based on the wire-to-wire capacitance and loop resistance of the second line;

calculating out the first constant and the second constant through the formulas $k = \dfrac{Y1(f_0) - Y2(f_0)}{X1(f_0) - X2(f_0)}$ and

$$const = \dfrac{X1(f_0) \times Y2(f_0) - X2(f_0) \times Y1(f_0)}{X1(f_0) - X2(f_0)},$$ where $k$ is the first constant and $const$ is the second constant, $f_0$ is the first frequency, $X1(f_0)$ is the rough attenuation of the first line at the first frequency, $X2(f_0)$ is the rough attenuation of the second line at the first frequency, $Y1(f_0)$ is the actual attenuation of the first line at the first frequency and $Y2(f_0)$ is the actual attenuation of the second line at the first frequency.

The process of calculating the attenuation of the line based on the actual attenuation of the line at the first frequency, the first frequency and the test frequency includes:

calculating the attenuation of the line at a test frequency following an formula $Y(f) = Y(f_0) \times \sqrt{\dfrac{f}{f_0}}$, where f is the test frequency, $f_0$ is the first frequency, $Y(f)$ is the line attenuation at the test frequency and $Y(f_0)$ is the actual attenuation of the line at the first frequency.

Preferably, the frequency of the low-frequency test signal is below 1000 Hz.
Preferably, the first frequency is higher than or equal to 100 KHz and is lower than or equal to 500 KHz.
The DSL is an Asymmetric Digital Subscriber Line (ADSL), or a High-bit-rate Digital Subscriber Line (HDSL), or a Very-high-speed Digital Subscriber Line (VDSL).
In the fore-going method provided by embodiments of the present invention, the loop resistance $R$ and the wire-to-wire capacitance Care measured using a low-frequency test signal and the attenuation of the line at the frequency $f_0$ is calculated, then the attenuation of the line at the given frequency $f$ is calculated accordingly. In the method provided by the embodiment of the present invention, the four first parameters R(f), L(f), G and C at the given frequency $f$ are not measured and the tough measurement process may thus be avoided. Furthermore, the line attenuation may be calculated based on the loop resistance and the wire-to-wire capacitance at a low frequency through some embodiments of the present invention, and consequently the broadband test system may be simplified to a great extent and the cost thereof may be reduced. As the loop resistance $R$ is almost a constant at low frequency, errors in the line attenuation may be reduced by the method provided by some embodiments of the present invention. The first constant and the second constant employed in the formulas of the embodiments of the present invention are invariable regardless applied in lines of the same diameter or lines of different diameters. Therefore, the method provided by the embodiments of the present invention may be used for calculating the attenuation of mixed-diameter lines, and may further solve the complexity and considerable error in the calculation of the line attenuation for mixed-diameter lines.

Brief Description of the Drawings

Fig. 1 is a schematic diagram illustrating a process of obtaining the attenuation feature of the line according to the related art;

Fig. 2 is a schematic diagram illustrating a process of obtaining the attenuation feature of the line according to an embodiment of the present invention.

Embodiments of the Invention

The present invention is hereinafter described in detail with reference to embodiments and accompanying drawings.

In the embodiments of the present invention, the attenuation of a twisted pair at a first frequency $f_0$, within a range from 100 KHz to 500 KHz, is calculated based on the loop resistance and wire-to-wire capacitance of the twisted pair, and the attenuation of the line at the given frequency is calculated accordingly.

As shown in Fig. 2, the process of obtaining the attenuation feature of the line according to an embodiment of the present invention includes:

Step 201: measure the wire-to-wire capacitance $C$ of the twisted pair, the measurement is the same as that in the related art. The wire-to-wire capacitance $C$ does not vary with the frequency, so the wire-to-wire capacitance $C$ may be measured at any frequency. In the embodiment, the wire-to-wire capacitance $C$ is measured at a low frequency, i.e., the wire-to-wire capacitance $C$ of the line is measured when a low-frequency test signal whose frequency is below 1000 Hz is sent into the line.

Step 202: send a low-frequency test signal whose frequency is below 1000 Hz into the line and measure the loop resistance $R$ of the line. As the frequency of the test signal is very low, the obtained loop resistance $R$ is approximate to the direct current loop resistance of the line.

It should be noted that there is no sequential requirement on the execution of Step 201 and Step 202, i.e., the wire-to-wire capacitance $C$ may be measured first and the loop resistance $R$ next, or the loop resistance $R$ may be measured first and the wire-to-wire capacitance $C$ next, or the wire-to-wire capacitance $C$ and the loop resistance $R$ may be measured at the same time.

Step 203: calculate the rough attenuation $X(f_0)$ of the line at a first frequency $f_0$ based on the wire-to-wire capacitance $C$ and the loop resistance $R$ obtained. The first frequency $f_0$ is higher than or equal to 100 KHz and lower than or equal to 500 KHz, i.e., from 100 KHz to 500 KHz.

The rough attenuation $X(f_0)$ of the line at the first frequency $f_0$ is calculated following formula 4; and the formula 4 is derived from signal processing medium-wave equation:

$$X(f_0) = 20\log_{10} e \times \sqrt{\pi \times f_0 \times R \times C} \qquad (4)$$

Where e is the base of the natural logarithm, $\log_{10} e$ denotes the logarithm of e with base 10, the value of $f_0$ is between 100 KHz and 500 KHz, $R$ is the loop resistance, $C$ is the wire-to-wire capacitance.

Step 204: calculate the actual attenuation $Y(f_0)$ of the line at the first frequency $f_0$ based on the rough attenuation $X(f_0)$ of the line at the first frequency $f_0$. An Experience formula 5 is adopted in this step:

$$Y(f_0) = k \times X(f_0) + const \qquad (5)$$

Where $k$ and *const* are constants, referred to as the first constant and the second constant, respectively. Through a large amount of tests and simulations, it is found that $k$ and *const,* no matter on lines of diameter 0.4mm or on lines of diameter 0.5mm, or on mixed-diameter lines of diameter 0.4mm and diameter 0.5mm, are basically invariable at the same frequency $f_0$. On such a premise, the actual attenuation of two lines $Y1(f_0)$ and $Y_2(f_0)$, may be measured at

the first frequency $f_0$, and the loop resistance R and the wire-to-wire capacitance $C$ of the two lines may be measured at the same time and the rough attenuation of the two lines, i.e., $X1(f_0)$ and $X2(f_0)$, are calculated through the formula 4. The Equations 6 is obtained through putting $Y1(f_0)$, $Y2(f_0)$ and $X1(f_0)$, $X2(f_0)$ respectively into the experiential Formula 5:

$$\begin{cases} Y1(f_0) = k \times X1(f_0) + const \\ Y2(f_0) = k \times X2(f_0) + const \end{cases} \tag{6}$$

It is easy to get the values of constants $k$ and $const$ through the Equations 6, as shown in formula 7 and formula 8:

$$k = \frac{Y1(f_0) - Y2(f_0)}{X1(f_0) - X2(f_0)} \tag{7}$$

$$const = \frac{X1(f_0) \times Y2(f_0) - X2(f_0) \times Y1(f_0)}{X1(f_0) - X2(f_0)} \tag{8}$$

It can be deduced from the formula 4 and the experience formula 5 that the two formulas may be combined into one, as shown in formula 9:

$$\begin{aligned} Y(f_0) &= k \times X(f_0) + const \\ &= k \times 20 \times \log_{10} e \times \sqrt{\pi \times f_0 \times R \times C} + const \end{aligned} \tag{9}$$

Accordingly, Step 203 and Step 204 may be combined into a step of: calculating the actual attenuation $Y(f_0)$ of the line at the first frequency $f_0$ through the formula 9 based on the wire-to-wire capacitance $C$, the loop resistance $R$ and the first frequency $f_0$.

The constants $k$ and $const$ may be obtained in advance through the following steps: calculate the actual attenuation of the two lines, i.e., $Y1(f_0)$ and $Y2(f_0)$, at the first frequency $f_0$, measure the loop resistances $R1$ and $R2$ of the two lines, measure the wire-to-wire capacitances $C1$ and $C2$ of the two lines, and putting $Y1(f_0)$, $Y2(f_0)$, $R1$, $R2$, $C1$ and $C2$ into the formula 9 to obtain Equations 10:

$$\begin{cases} Y1(f_0) = k \times 20 \times \log_{10} e \times \sqrt{\pi \times f_0 \times R1 \times C1} + const \\ Y2(f_0) = k \times 20 \times \log_{10} e \times \sqrt{\pi \times f_0 \times R2 \times C2} + const \end{cases} \tag{10}$$

It is easy to get the values of constants $k$ and $const$ through the Equations 10, as shown in formula 11 and formula 12:

$$k = \frac{Y1(f_0) - Y2(f_0)}{20\log_{10} e \times \sqrt{\pi \times f_0 \times R1 \times C1} - 20\log_{10} e \times \sqrt{\pi \times f_0 \times R2 \times C2}} \tag{11}$$

$$const = \frac{20\log_{10} e \times \sqrt{\pi \times f_0 \times R1 \times C1} \times Y2(f_0) - 20\log_{10} e \times \sqrt{\pi \times f_0 \times R2 \times C2} \times Y1(f_0)}{20\log_{10} e \times \sqrt{\pi \times f_0 \times R1 \times C1} - 20\log_{10} e \times \sqrt{\pi \times f_0 \times R2 \times C2}} \quad (12)$$

Step 205: calculate the attenuation of the line at a test frequency $f$ based on the first frequency $f_0$, the actual attenuation $Y(f_0)$ of the line at the first frequency , $f_0$ and the test frequency $f$.

Formula 13 is employed in this step:

$$Y(f) = Y(f_0) \times \sqrt{\frac{f}{f_0}} \qquad (13)$$

Formula 13 is an approximate formula in engineering of line features and is only valid when $f_0$ is higher than or equal to 100 KHz, so it is required in Step 203 that $f_0$ must be higher than 100 KHz. It is only a general condition that $f_0$ is less than or equal to 500 KHz, not a necessary condition.

The foregoing are only preferred embodiments of the present invention and is not for use in limiting this invention, any modification, equivalent replacement or improvement made under the invention is included in the protection scope of the present invention.

**Claims**

1. A method for calculating attenuation of a Digital Subscriber Line (DSL), **characterized in that**, said method comprising the steps:

   sending a low-frequency test signal into the line;
   measuring a wire-to-wire capacitance and a loop resistance of the line according to the low-frequency test signal (201, 202);
   calculating an actual attenuation of the line based on the wire-to-wire capacitance, the loop resistance, a first frequency, a first constant and a second constant (203, 204);
   calculating an attenuation of the line at a test frequency based on the actual attenuation of the line at the first frequency, the first frequency and the test frequency (205).

2. The method of claim 1, wherein the process of calculating an actual attenuation of the line at the first frequency based on the wire-to-wire capacitance, the loop resistance, the first frequency, the first constant and the second constant includes:

   calculating a rough attenuation of the line at the first frequency based on the wire-to-wire capacitance, the loop resistance and the first frequency; and
   multiplying the rough attenuation of the line at the first frequency by the first constant and adding the second constant to the result to obtain the actual attenuation of the line at the first frequency.

3. The method of claim 2, before the process of multiplying the rough attenuation of the line at the first frequency by the first constant and adding the second constant to the result to obtain the actual attenuation of the line at the first frequency, the method further comprising:

   measuring the loop resistance, the wire-to-wire capacitance and calculating the actual attenuation of a first line at the first frequency; measuring the loop resistance, the wire-to-wire capacitance and calculating the actual attenuation of a second line at the first frequency;
   calculating the rough attenuation of the first line at the first frequency based on the wire-to-wire capacitance and loop resistance of the first line; calculating the rough attenuation of the second line at the first frequency based on the wire-to-wire capacitance and loop resistance of the second line;

calculating out the first constant and the second constant through the formulae $k = \dfrac{Y1(f_0) - Y2(f_0)}{X1(f_0) - X2(f_0)}$ and

$$const = \frac{X1(f_0) \times Y2(f_0) - X2(f_0) \times Y1(f_0)}{X1(f_0) - X2(f_0)},$$ where $k$ is the first constant and $const$ is the second constant,

$f_0$ is the first frequency, $X1(f_0)$ is the rough attenuation of the first line at the first frequency, $X2(f_0)$ is the rough attenuation of the second line at the first frequency, $Y1(f_0)$ is the actual attenuation of the first line at the first frequency and $Y2(f_0)$ is the actual attenuation of the second line at the first frequency.

4. The method of claim 1, wherein the process of calculating an attenuation of the line based on the actual attenuation of the line at the first frequency, the first frequency and the test frequency comprises:

calculating the attenuation of the line at the test frequency following an formula $Y(f) = Y(f_0) \times \sqrt{\dfrac{f}{f_0}}$, where f is the test frequency, $f_0$ is the first frequency, $Y(f)$ is the line attenuation at the test frequency and $Y(f_0)$ is the actual attenuation of the line at the first frequency.

5. The method of any one of claims 1 to 4, wherein the frequency of the low-frequency test signal is below 1000 Hz.

6. The method of any one of claims 1 to 4, wherein the first frequency is higher than or equal to 100 KHz and is lower than or equal to 500 KHz.

7. The method of claim 1, wherein the DSL is an Asymmetric Digital Subscriber Line (ADSL), or a High-bit-rate Digital Subscriber Line (HDSL), or a Very-high-speed Digital Subscriber Line (VDSL).

**Patentansprüche**

1. Verfahren zur Berechnung der Dämpfung einer Digitalen Teilnehmerleitung (DSL), **dadurch gekennzeichnet, dass** das Verfahren die Schritte umfasst:

Senden eines Testsignals mit niedriger Frequenz in die Leitung;
Messen einer Wire-to-wire-Kapazität und eines Schleifenwiderstands der Leitung entsprechend dem Testsignal mit niedriger Frequenz (201, 202);
Berechnen einer tatsächlichen Dämpfung der Leitung, basierend auf der Wire-to-wire-Kapazität, dem Schleifenwiderstand, einer ersten Frequenz, einer ersten Konstanten und einer zweiten Konstanten (203, 204);
Berechnen einer Dämpfung der Leitung bei einer Testfrequenz, basierend auf der tatsächlichen Dämpfung der Leitung bei der ersten Frequenz, der ersten Frequenz und der Testfrequenz (205).

2. Verfahren nach Anspruch 1, wobei der Berechnungsprozess einer tatsächlichen Dämpfung der Leitung bei der ersten Frequenz basierend auf der Wire-to-wire-Kapazität, dem Schleifenwiderstand, der ersten Frequenz, der ersten Konstanten und der zweiten Konstanten umfasst:

Berechnen einer ungefähren Dämpfung der Leitung bei der ersten Frequenz basierend auf der Wire-to-wire-Kapazität, dem Schleifenwiderstand und der ersten Frequenz; und
Multiplizieren der ungefähren Dämpfung der Leitung bei der ersten Frequenz mit der ersten Konstanten und Addieren der zweiten Konstanten zu dem Ergebnis, um die tatsächliche Dämpfung der Leitung bei der ersten Frequenz zu erhalten.

3. Verfahren nach Anspruch 2, wobei das Verfahren ferner vor dem Multiplikationsprozess der ungefähren Dämpfung der Leitung bei der ersten Frequenz mit der ersten Konstanten und dem Addieren der zweiten Konstanten zu dem Ergebnis, um die tatsächliche Dämpfung der Leitung bei der ersten Frequenz zu erhalten, umfasst:

Messen des Schleifenwiderstands, der Wire-to-wire-Kapazität und Berechnen der tatsächlichen Dämpfung einer ersten Leitung bei der ersten Frequenz; Messen des Schleifenwiderstands, der Wire-to-wire-Kapazität und Berechnen der tatsächlichen Dämpfung einer zweiten Leitung bei der ersten Frequenz;

Berechnen der ungefähren Dämpfung der ersten Leitung bei der ersten Frequenz basierend auf der Wire-to-wire-Kapazität und dem Schleifenwiderstand der ersten Leitung; Berechnen der ungefähren Dämpfung der zweiten Leitung bei der ersten Frequenz basierend auf der Wire-to-wire-Kapazität und dem Schleifenwiderstand der zweiten Leitung;

Ausrechnen der ersten Konstanten und der zweiten Konstanten durch die Formeln

$$k = \frac{Y1(f_0) - Y2(f_0)}{X1(f_0) - X2(f_0)} \quad \text{und} \quad const = \frac{X1(f_0) \times Y2(f_0) - X2(f_0) \times Y1(f_0)}{X1(f_0) - X2(f_0)},$$

wobei $k$ die erste Konstante und *const* die zweite Konstante ist, $f_0$ die erste Frequenz ist, $X1(f_0)$ die ungefähre Dämpfung der ersten Leitung bei der ersten Frequenz ist, $X2(f_0)$ die ungefähre Dämpfung der zweiten Leitung bei der ersten Frequenz ist, $Y1(f_0)$ die tatsächliche Dämpfung der ersten Leitung bei der ersten Frequenz und $Y2(f_0)$ die tatsächliche Dämpfung der zweiten Leitung bei der ersten Frequenz ist.

4. Verfahren nach Anspruch 1, wobei der Berechnungsprozess einer Dämpfung der Leitung basierend auf der tatsächlichen Dämpfung der Leitung bei der ersten Frequenz, der ersten Frequenz und der Testfrequenz umfasst: Berechnen der Dämpfung der Leitung bei der Testfrequenz nach einer Formel

$$Y(f) = Y(f_0) \times \sqrt{\frac{f}{f_0}}$$

wobei $f$ die Testfrequenz ist, $f_0$ die erste Frequenz ist, $Y(f)$ die Leitungsdämpfung bei der Testfrequenz ist und $Y(f_0)$ die tatsächliche Dämpfung der Leitung bei der ersten Frequenz ist.

5. Verfahren nach irgendeinem der Ansprüche 1 bis 4, wobei die Frequenz des Testsignals mit niedriger Frequenz unter 1000 Hz liegt.

6. Verfahren nach irgendeinem der Ansprüche 1 bis 4, wobei die erste Frequenz höher als oder gleich 100 KHz und niedriger als oder gleich 500 KHz ist.

7. Verfahren nach Anspruch 1, wobei die DSL eine Asymmetrische Digitale Teilnehmerleitung (ADSL) oder eine Digitale Teilnehmerleitung mit hoher Bitrate (HDSL) oder eine Digitale Teilnehmerleitung mit sehr hoher Geschwindigkeit (VDSL) ist.

**Revendications**

1. Procédé de calcul de l'atténuation d'une ligne d'abonné numérique (DSL), **caractérisé en ce que** ledit procédé comprend les étapes consistant à:

envoyer un signal test basse fréquence dans la ligne;
mesurer une capacité fil-à-fil et une résistance de boucle de la ligne en accord avec le signal test basse fréquence (201, 202);
calculer une atténuation actuelle de la ligne sur la base de la capacité fil-à-fil, la résistance de boucle, une première fréquence, une première constante et une seconde constante (203, 204);
calculer une atténuation de la ligne à une fréquence test sur la base de l'atténuation actuelle de la ligne à la première fréquence, la première fréquence et la fréquence test (205).

2. Procédé selon la revendication 1, où le processus de calcul d'une atténuation actuelle de la ligne à la première fréquence sur la base de la capacité fil-à-fil, la résistance de boucle, la première fréquence, la première constante et la seconde constante comprend:

le calcul d'une atténuation grossière de la ligne à la première fréquence sur la base de la capacité fil-à-fil, la résistance de boucle et la première fréquence; et

la multiplication de l'atténuation grossière de la ligne à la première fréquence par la première constante et l'addition de la seconde constante au résultat pour obtenir l'atténuation actuelle de la ligne à la première fréquence.

**3.** Procédé selon la revendication 2, avant le processus consistant à multiplier l'atténuation grossière de la ligne à la première fréquence par la première constante et l'addition de la seconde constante au résultat pour obtenir l'atténuation actuelle de la ligne à la première fréquence, le procédé comprenant en outre:

la mesure de la résistance de boucle, de la capacité fil-à-fil et le calcul de l'atténuation actuelle d'une première ligne à la première fréquence; la mesure de la résistance de boucle, la capacité fil-à-fil et le calcul de l'atténuation actuelle de la seconde ligne à la première fréquence;

le calcul de l'atténuation grossière de la première ligne à la première fréquence sur la base de la capacité fil-à-fil et la résistance de boucle de la première ligne; le calcul de l'atténuation grossière de la seconde ligne à la première fréquence sur la base de la capacité fil-à-fil et la résistance de boucle de la seconde ligne;

le calcul de la première constante et de la seconde constante par les formules $k = \dfrac{Y1(f_0) - Y2(f_0)}{X1(f_0) - X2(f_0)}$ et

$const = \dfrac{X1(f_0) \times Y2(f_0) - X2(f_0) \times Y1(f_0)}{X1(f_0) - X2(f_0)}$, où $k$ est la première constante et *const* est la seconde constante, $f_0$ est la première fréquence, $X1(f_0)$ est l'atténuation grossière de la première ligne à la première fréquence, $X2(f_0)$ est l'atténuation grossière de la seconde ligne à la première fréquence, $Y1(f_0)$ est l'atténuation actuelle de la première ligne à la première fréquence et $Y2(f_0)$ est l'atténuation actuelle de la seconde ligne à la première fréquence.

**4.** Procédé selon la revendication 1, où le processus de calcul d'une atténuation de la ligne sur la base de l'atténuation actuelle de la ligne à la première fréquence, la première fréquence et la fréquence test comprend:

le calcul de l'atténuation de la ligne à la fréquence test selon une formule $Y(f) = Y(f_0) \times \sqrt{\dfrac{f}{f_0}}$, où f est la fréquence test, $f_0$ est la première fréquence, Y(f) est l'atténuation de ligne à la fréquence test et Y($f_0$) est l'atténuation actuelle de la ligne à la première fréquence.

**5.** Procédé selon l'une des revendications 1 à 4, où la fréquence du signal test basse fréquence est inférieure à 1000 Hz.

**6.** Procédé selon l'une des revendications 1 à 4, où la première fréquence est plus élevée ou égale à 100 KHz et est inférieure ou égale à 500 KHz.

**7.** Procédé selon la revendication 1, où la DSL est une Ligne d'Abonné Numérique Asymétrique (ADSL) ou une Ligne d'Abonné Numérique à Haut Débit (HDSL) ou une ligne d'abonné Numérique à Très Haut Débit (VDSL).

| Measure the first parameters of the line (R, L, G, C) | 101 |

↓

| Calculate the propagation constant (γ) of the line | 102 |

↓

| Calculate the attenuation factor (α) of the line based on the propagation constant (γ) | 103 |

↓

| Calculate the attenuation Y(f) of the line at every frequency point based on the attenuation factor (α) | 104 |

## Fig.1

| measure the wire-to-wire capacitance C | 201 |

↓

| measure the loop resistance R of the line using a low-frequency test signal | 202 |

↓

| calculate the rough attenuation X(f₀) at the frequency f0 based on the formula | 203 |

↓

| calculate the actual attenuation Y(f₀) at the frequency f₀ based on the experience formula | 204 |

↓

| obtain the attenuation Y(f) at the frequency f | 205 |

## Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0101597 A